# EUROPEAN PATENT APPLICATION

(11) **EP 0 820 887 A2**
(43) Date of publication of application: **28.01.1998**
(21) Application number: 97305427.3
(22) Date of filing: 21.07.1997
(51) Int. Cl.: B60H 1/00

(54) **Air conditioner capable of discharging temperature controlled air and cooled air in a separated form**

(30) Priority: 22.07.1996 JP 210563/96
(71) Applicant: SANDEN CORPORATION, Isesaki-shi Gunma, 372 (JP)
(72) Inventor: Shimizu, Kenji, Isesaki-shi, Gunma 372 (JP)
(74) Representative: Jackson, Peter Arthur

(57) **Abstract**

In an air conditioner (11) in which an evaporator (13) and a heater core (14) are arranged within an airflow duct (12) upstream and downstream in an airflow direction, respectively, the airflow duct has a first wind path (19) and a second wind path (21) which is separated from the first wind path. The first wind path is connected to the evaporator and conducts cooled air from the evaporator to a VENT outlet port (18) without being heated by the heater core. The second wind path is connected to the heater core and conducts temperature-controlled air from the heater core to a FOOT outlet port (20). An air-mixing damper (16) controls a flow of the cooled air towards the heater core. It is preferable that a cool-max damper (22) controls communication between the first and the second wind paths.

## Description

This invention relates to an air conditioner and, in particular, to an air conditioner adapted to be mounted in an automobile.

A conventional air conditioner of the type comprises an airflow duct for conducting air. In the airflow duct, a cooling unit and a heater core are placed. The cooling unit is for cooling the air into a cooled air. The heater core is for heating the cooled air into a temperature-controlled air. For controlling a flow of the cooled air towards the heater core, an air-mixing damper is disposed as an air flow control unit immediately upstream of the heater core.

When the air-mixing damper faces the heater core to shut the cooled air, the heater core is prevented from being exposed to the cooled air. As a result, the cooled air is discharged as a cool-max wind from the airflow duct without being heated by the heater core.

The conventional air conditioner further comprises a shutting damper disposed immediately downstream of the heater core. The shutting damper is for shutting up the heater core in cooperation with the air-mixing damper during a time when the heater core is not used.

In the conventional air conditioner, the shutting damper must have a size equivalent to that of the air-mixing damper. As a result, a large space is required to mount and operate the shutting damper.

In addition, the conventional air conditioner undesiredly allows the cool-max wind to be delivered to a DEF outlet port known in the art. When the cool-max wind is blown out from the DEF outlet port, an outer surface of a window is often clouded during defrosting.

It is therefore an object of this invention to provide an air conditioner which can be reduced in entire size.

It is another object of this invention to provide an air conditioner of the type described, which can inhibit a cool-max wind from being directly delivered to an undesired outlet port.

Other objects of this invention will become clear as the description proceeds.

According to this invention, there is provided an air conditioner which comprises an airflow duct for conducting air, cooling means placed in the airflow duct for cooling the air into cooled air, a heater core placed in the airflow duct for heating the cooled air into temperature-controlled air, and airflow control means for controlling a flow of the cooled air towards the heater core. The airflow duct has an inlet port, a first outlet port, and a second outlet port. In the air conditioner, the airflow duct comprises a first wind path connected to the first outlet port and the cooling means for conducting the cooled air to the first outlet port without being heated by the heater core, and a second wind path connected between the second outlet port and the heater core and separated from the first wind path for conducting the temperature-controlled air to the second outlet port.

In the accompanying drawings:-
Fig. 1 is a schematic vertical sectional view of a conventional air conditioner; and
Fig. 2 is a schematic vertical sectional view of an air conditioner according to an embodiment of this invention.

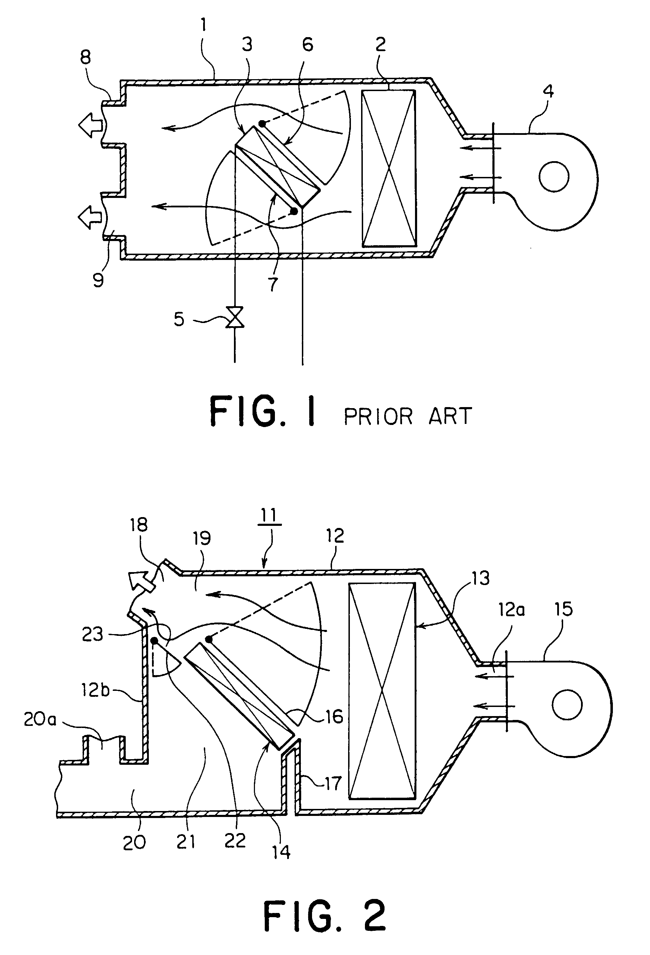

Referring to Fig. 1, description will be made at first as regards a conventional air conditioner adapted to be mounted in an automobile. The conventional automobile air conditioner comprises an airflow duct 1 defining an airway. Within the airflow duct 1, an evaporator 2 as a cooling unit and a heater core 3 as a heating unit are disposed upstream and downstream in an airflow direction, respectively. Air is sucked by a blower unit 4 as an airstream and is allowed to successively pass through the evaporator 2 and the heater core 3. The heater core 3 is arranged to occupy a part of the airway in a transversal direction. In other words, a space is left at either side of the heater core 3 in the transversal direction to allow the airstream to bypass the heater core 3. In order to heat the airstream, hot water is supplied to the heater core 3 at a flow rate controlled by a water valve 5.

An air-mixing damper 6 is disposed immediately upstream of the heater core 3. The air-mixing damper 6 serves to distribute the airstream passing through the evaporator 2 into a bypass flow bypassing the heater core 3 and a through flow passing through the heater core 3. Specifically, by selecting a degree of opening of the air-mixing damper 6, a ratio of the bypass flow and the through flow is controlled. Immediately downstream of the heater core 3, a heater core shutting damper 7 for shutting an outflow side of the heater core 3 is disposed. The airstream subjected to temperature control is delivered to a VENT outlet port 8 or a FOOT outlet port 9. The FOOT outlet port 9 is often branched to form a DEF outlet port in addition.

When the above-mentioned conventional air conditioner is operated in a maximum cooling mode, namely, a cool-max mode, both of the air-mixing damper 6 and the heat core shutting damper 7 are closed to seal the heater core 3 for the purpose of heat insulation. Thus, the airstream or a cool wind passing through the evaporator 2 is prevented from being affected by the heat generated by the heater core 3. During the cool-max mode, the water valve 5 is closed to stop supply of the hot water.

In the conventional air conditioner of the above-mentioned structure, the heater core shutting damper 7 serves to close the outflow side of the heater core 3. Therefore, the heater core shutting damper 7 must have a size equivalent to that of the air-mixing damper 6. As a result, a large space is required to mount and operate the heater core shutting damper 7.

Although the DEF outlet port principally requires no cool wind in the cool-max mode, the above-mentioned structure undesiredly allows the cool wind in the cool-max mode to be delivered to the DEF outlet port. When the cool-max wind in the cool-max mode is blown out from the DEF outlet port, an outer surface of a window is often clouded during defrosting.

Referring to Fig. 2, the description will be made as regards an air conditioner according to a preferred embodiment of this invention. The air conditioner is designed to be mounted in an automobile and is designated by a reference numeral 11.

The air conditioner 11 comprises an airflow duct 12 defining an airway for conducting air. Within the airflow duct 12, an evaporator 13 and a heater core 14 are disposed upstream and downstream in an airflow direction, respectively. The air is sucked by a blower unit 15 as an airstream which is supplied to an inlet port 12a of the airflow duct 12 to pass through the evaporator 13 and then sent towards the heater core 14. When passing through the evaporator 13, the air is cooled into cooled air. When passing through the heater core 14, the cooled air is heated into temperature-controlled air. The heater core 14 is arranged to occupy a part of the airway in a transversal direction and is inclined to a central axis of the airflow duct 12.

An air-mixing damper 16 is disposed immediately upstream of the heater core 14. The air-mixing damper 16 is operable to controllably open and close an inlet side or air inflow side of the heater core 14. One end or lower end of the heater core 14 is connected to a partition 17 which is an integral part of the airflow duct 12. The connected portion between the heater core 14 and the partition 17 is permanently sealed. The air-mixing damper 16 serves to distribute the airstream passing through the evaporator 13 into a bypass flow bypassing the heater core 14 and a through flow passing through the heater core 14. Specifically, by selecting a degree of opening of the air-mixing damper 16, a ratio of the bypass flow and the through flow is controlled.

A first wind path 19 is defined for the bypass flow bypassing the heater core 14 to reach a VENT outlet port 18 which is referred to as a first outlet port. On the other hand, a second wind path 21 is defined for the through flow passing through the heater core 14 to reach a FOOT outlet port 20 which is referred to as a second outlet port. The FOOT outlet port 20 is branched to form a defrosting duct 20a for conducting the temperature-controlled air to a position which is adjacent to a window panel of the automobile.

The other end or upper end of the heater core 14 in the inclined arrangement is closely adjacent to a terminating wall 12b of the airflow duct 12. The terminating wall 12b is between the VENT outlet port 18 and the FOOT outlet port 20. Between the terminating wall 12b and the upper end of the heater core 14, a gap or through hole 23 is made to communicate the first and the second wind paths 19 and 21 to each other. A cool-max damper 22 of a swinging type is disposed in the through hole 23 to control communication between the first and the second wind paths 19 and 21 with opening and closing thereof. When the cool-max damper 22 is closed and opened, communication therebetween is shut off and established, respectively. By controlling the degree of opening of the cool-max damper 22, the degree of communication can be controlled. A combination of the cool-max damper 22 and the through hole 23 will be referred to as a communication control arrangement.

When the air conditioner 11 is operated in a normal cooling mode, the air-mixing damper 16 is opened and, principally, the cool-max pamper 22 is opened also. By opening the air-mixing damper 16, the cooled air is divided into a first and a second part. The first part of the cooled air is conducted to the VENT outlet port 18 through the first wind path 18 without being heated by the heater core 14. The second part of the cooled air is supplied to the heater core 14. In the heater core 14, the second part is heated into the temperature-controlled air and then is conducted to the FOOT outlet port 20 through the second wind path 21.

When the air conditioner 11 is operated in a maximum cooling mode or a cool-max mode, the air-mixing damper 16 is closed and, principally, the cool-max damper 22 is closed also. By closing the air-mixing damper 16, the cooled air is inhibited from flowing into the heater core 14 to travel through the first wind path 19. By closing the cool-max damper 22, the cooled air is inhibited from flowing into the second wind path 21. As a result, the cooled air is exclusively delivered to the VENT outlet port 18. Thus, the cooled air in the cool-max mode is substantially completely out of contact with the heater core 14.

Typically, the cooled air in the cool-max mode is blown out from the VENT outlet port 18. The FOOT outlet port 20 do not require the cooled air in the cool-max mode. Therefore, by providing the cool-max damper 22 as described above and closing the cool-max damper 22 to shut off the communication between the first and the second wind paths 19 and 21, the cooled air maximally cooled in the cool-max mode is efficiently sent to the VENT outlet port 18. Consequently, the cooled air in the cool-max mode is efficiently supplied to a compartment of the automobile.

Since the cooled air flows out of contact with the heater core 14, the performance in the cool-max mode is further improved. In addition, continuous supply of the hot water to the heater core 14 causes no influence upon the cooled air.

The cool-max damper 22 need not entirely close an outflow side of the heater core 14 unlike a heater core shutting damper in the prior art. It is sufficient for the cool-max damper 22 to shut off the communication between the first and the second wind paths 19 and 21. This means that the cool-max damper 22 can be small in size as illustrated in the figure. In particular, when the upper end of the heater core 14 and the terminating wall 12b of the airflow duct 12 is closely adjacent, a desired function can be achieved by a very small damper as the cool-max damper 22. Since the cool-max damper 22 is small in size as described above, the airflow duct 12 and thus the whole air conditioner can be remarkably reduced in size.

During the cool-max mode, the cooled air is not sent to the defrosting duct 20a in principle. Therefore, the window of the automobile is prevented from being clouded. Even if the cool-max mode is operated while the cool-max damper 22 is half opened, a slightly heated wind is delivered to the defrosting duct 20a. Therefore, it is possible to avoid the window from being clouded by an excessively cooled air or wind blowing against the window.

While this invention has thus far been described in conjunction with the single preferred embodiment thereof, it will readily be possible for those skilled in the art to put this invention into practice in various other manners. For example, the heater core may be arranged perpendicular to the duct axis of the the airflow duct. The cool-max damper may be made of a sliding damper or a film damper known in the art.

## Claims

1. An air conditioner comprising an airflow duct for conducting air, cooling means placed in said airflow duct for cooling said air into cooled air, a heater core placed in said airflow duct for heating said cooled air into temperature-controlled air, and airflow control means for controlling a flow of said cooled air towards said heater core, said airflow duct having an inlet port, a first outlet port, and a second outlet port, said airflow duct comprising:
a first wind path connected to said first outlet port and said cooling means for conducting said cooled air to said first outlet port without being heated by said heater core; and
a second wind path connected between said second outlet port and said heater core and separated from said first wind path for conducting said temperature-controlled air to said second outlet port.

2. An air conditioner as claimed in claim 1, further comprising communication control means connected to said airflow duct for controlling communication between said first and said second wind paths.

3. An air conditioner as claimed in claim 1, wherein said airflow duct has a terminating wall between said first and said second output ports, said heater core being adjacent to said terminating wall with a distance therebetween, said communication control means comprising:
a through hole communicating said first and said second wind paths to each other at a position which is between said heater core and said terminating wall; and
a damper coupled to said through hole for controlling closing and opening of said through hole.

4. An air conditioner as claimed in claim 1, wherein said air conditioner is for being mounted on an automobile having a window panel, said air conditioner further comprising a defrosting duct connected to said second outlet port for conducting said temperature-controlled air to a position which is adjacent to said window panel.

5. An air conditioner as claimed in claim 1, wherein said airflow duct extends along a duct axis, said heater core being inclined to said central axis.
